# EUROPÄISCHE PATENTSCHRIFT

(11) **EP 2 724 296 B1**
(45) Veröffentlichungstag und Bekanntmachung des Hinweises auf die Patenterteilung: **13.06.2018**
(21) Anmeldenummer: 12742855.5
(22) Anmeldetag: 24.07.2012
(51) Int. Cl.: G06N 3/04, G06Q 50/06

(54) **VERFAHREN ZUR RECHNERGESTÜTZTEN MODELLIERUNG EINES TECHNISCHEN SYSTEMS**
METHOD FOR THE COMPUTER-BASED MODELISATION OF A TECHNICAL SYSTEM
PROCÉDÉ À LA MODÉLISATION D'UN SYSTÈME TECHNIQUE UTILISANT L'ORDINATEUR

(30) Priorität: 18.08.2011 DE 102011081197
(43) Veröffentlichungstag der Anmeldung: 30.04.2014
(73) Patentinhaber: Siemens Aktiengesellschaft, 80333 München (DE)
(72) Erfinder: CLEVE, Jochen, DK-1416 København (DK); GROTHMANN, Ralph, 80801 München (DE); HEESCHE, Kai, 81539 München (DE); TIETZ, Christoph, 85521 Ottobrunn (DE); ZIMMERMANN, Hans-Georg, 82319 Starnberg/Percha (DE)
(86) Internationale Anmeldenummer: PCT/EP2012/064529
(87) Internationale Veröffentlichungsnummer: WO 2013/023887

(56) Entgegenhaltungen:
- EP-A1- 2 192 456
- JENSEN N O: "A NOTE ON WIND GENERATOR INTERACTION", RISO NATIONAL LABORATORY TECHNICAL REPORT, XX, XX, 1. November 1983 (1983-11-01), Seiten 1,05-16, XP001168643, in der Anmeldung erwähnt
- YASER SOLIMAN QUDAIH ET AL: "Power Distribution System Planning for Smart Grid Applications using ANN", ENERGY PROCEDIA, Bd. 12, 1. Januar 2011 (2011-01-01), Seiten 3-9, XP55024671, ISSN: 1876-6102, DOI: 10.1016/j.egypro.2011.10.003
- Z.W. ZHENG ET AL: "An Overview: the Development of Prediction Technology of Wind and Photovoltaic Power Generation", ENERGY PROCEDIA, Bd. 12, 1. Januar 2011 (2011-01-01), Seiten 601-608, XP55024672, ISSN: 1876-6102, DOI: 10.1016/j.egypro.2011.10.081
- JOCHEN CLEVE ET AL: "Model-based analysis of wake-flow data in the Nysted offshore wind farm", WIND ENERGY, Bd. 12, Nr. 2, 1. März 2009 (2009-03-01), Seiten 125-135, XP55041048, ISSN: 1095-4244, DOI: 10.1002/we.314
- SALCEDO-SANZ S ET AL: "Accurate short-term wind speed prediction by exploiting diversity in input data using banks of artificial neural networks", NEUROCOMPUTING, ELSEVIER SCIENCE PUBLISHERS, AMSTERDAM, NL, Bd. 72, Nr. 4-6, 1. Januar 2009 (2009-01-01), Seiten 1336-1341, XP025872785, ISSN: 0925-2312, DOI: 10.1016/J.NEUCOM.2008.09.010 [gefunden am 2008-10-22]

## Beschreibung

Die Erfindung betrifft ein Verfahren zur rechnergestützten Modellierung eines technischen Systems sowie ein Verfahren zur Prädiktion von einem oder mehreren Betriebsparametern eines technischen Systems.

In einer Vielzahl von Anwendungsgebieten ist es wünschenswert, das Verhalten eines technischen Systems rechnergestützt zu modellieren, um hierdurch bestimmte Betriebsparameter des technischen Systems vorherzusagen. Zum Beispiel werden im Bereich der elektrischen Energieerzeugung immer häufiger regenerative Energieerzeugungsanlagen eingesetzt, deren erzeugte Energiemengen stark von externen Größen und insbesondere von Wetterbedingungen beeinflusst werden. Somit ist es für ein technisches System in der Form einer regenerativen Energieerzeugungsanlage erwünscht, die zukünftig erzeugte Energiemenge geeignet vorherzusagen, um hierdurch die Energieeinspeisung einer solchen Energieerzeugungsanlage besser planen zu können.

Die Druckschrift EP 2 192 456 A1 offenbart ein Verfahren zum Abschätzen der erreichbaren Stromerzeugung einer Windturbine unter Verwendung eines neuronalen Netzes mit einer Eingabeschicht, einer versteckten Schicht und einer Ausgabeschicht. Das neuronale Netz wurde mit Messdaten der Turbine gelernt.

Aufgabe der Erfindung ist es, ein technisches System rechnergestützt derart zu modellieren, dass seine Betriebsparameter zuverlässig und genau prädiziert werden können.

Diese Aufgabe wird durch das Verfahren gemäß Patentanspruch 1 bzw. Patentanspruch 14 bzw. durch das Computerprogrammprodukt gemäß Patentanspruch 16 gelöst. Weiterbildungen der Erfindung sind in den abhängigen Ansprüchen definiert.

Das erfindungsgemäße Verfahren verwendet zur rechnergestützten Modellierung eines technischen Systems ein künstliches neuronales Netz. Dabei werden ein oder mehrere Ausgabevektoren in Abhängigkeit von einem oder mehreren Eingabevektoren durch das Lernen des neuronalen Netzes basierend auf Trainingsdaten aus bekannten Eingabevektoren und Ausgabevektoren modelliert, wobei ein jeweiliger Ausgabevektor eine oder mehrere Betriebsgrößen des technischen Systems umfasst und wobei ein jeweiliger Eingabevektor eine oder mehrere, die Betriebsgröße oder Betriebsgrößen beeinflussende Eingangsgrößen umfasst.

Das neuronale Netz ist dabei eine spezielle Variante eines Feed-Forward-Netzes. Ein Feed-Forward-Netz ist dadurch charakterisiert, dass mehrere übereinander liegende Neuronenschichten in einer Verarbeitungsrichtung von tieferen zu höheren Schichten über geeignete Gewichte in der Form von Gewichtsmatrizen miteinander gekoppelt sind, wobei die Neuronen innerhalb einer Schicht keine Verbindungen untereinander aufweisen. Das in der Erfindung verwendete Feed-Forward-Netz ist ein mehrschichtiges Netz mit mehreren miteinander verbundenen Schichten, welche eine Eingabeschicht, eine Mehrzahl von versteckten Schichten und eine Ausgabeschicht umfassen. Die Eingabeschicht enthält dabei eine Anzahl von Eingangsneuronen zur Beschreibung des oder der Eingabevektoren. Eine jeweilige versteckte Schicht umfasst demgegenüber eine Anzahl von versteckten Neuronen, und eine Ausgabeschicht enthält eine Anzahl von Ausgabeneuronen zur Beschreibung des oder der Ausgabevektoren.

Das neuronale Netz der Erfindung zeichnet sich dadurch aus, dass die Ausgabeschicht eine der Mehrzahl von versteckten Schichten entsprechende Mehrzahl von Ausgabeclustern aus jeweils einem oder mehreren Ausgabeneuronen umfasst, wobei jeder Ausgabecluster den gleichen Ausgabevektor beschreibt und mit einer anderen versteckten Schicht verbunden ist. Es ist somit jeder versteckten Schicht ein Ausgabecluster zugeordnet, wobei die versteckte Schicht nur mit diesem Ausgabecluster gekoppelt ist. Es werden folglich separate Ausgabecluster geschaffen, welche im neuronalen Netz unabhängig voneinander die gleichen Betriebsparameter des technischen Systems beschreiben. Im Unterschied zu herkömmlichen Feed-Forward-Netzen sind im erfindungsgemäßen neuronalen Netz die unterhalb der obersten versteckten Schicht liegenden versteckten Schichten nicht nur mit einer höheren versteckten Schicht, sondern auch mit einem Ausgabecluster der Ausgabeschicht verbunden. Hierdurch wird der Ausgabeschicht zusätzliche Fehlerinformation zugeführt, so dass ein entsprechend gelerntes neuronales Netz die Betriebsparameter eines technischen Systems besser vorhersagen kann. Da jeder der Ausgabecluster die gleichen Betriebsparameter liefert, können die prognostizierten Betriebsparameter beispielsweise durch eine Mittelung über die Ausgabecluster repräsentiert werden.

In einer besonders bevorzugten Ausführungsform des erfindungsgemäßen Verfahrens ist die Eingabeschicht des neuronalen Netzes mit jeder der versteckten Schichten verbunden, was in herkömmlichen Feed-Forward-Netzen nicht der Fall ist. Dort ist die Eingabeschicht nur mit der untersten versteckten Schicht gekoppelt. Auf diese Weise fließen die Eingangsgrößen, welche den Betrieb des technischen Systems beeinflussen, unmittelbar in jede versteckte Schicht ein, was wiederum zu einer verbesserten Prädiktion der Betriebsgrößen des technischen Systems führt.

In einer besonders bevorzugten Ausführungsform des erfindungsgemäßen Verfahrens werden entsprechende Betriebsgrößen des technischen Systems für einen längeren zukünftigen Zeitraum durch das neuronale Netz modelliert. Dabei umfasst ein jeweiliger Ausgabevektor eine oder mehrere Betriebsgrößen für mehrere aufeinander folgende zukünftige Zeitpunkte innerhalb eines zukünftigen Zeitraums, wobei der zukünftige Zeitraum vorzugsweise eine oder mehrere Tage umfasst und die Zeitpunkte vorzugsweise einen Abstand von einer Stunde aufweisen. Derartige Zeiträume eignen sich insbesondere zur Prädiktion von Energiemengen, die durch regenerative Energieerzeugungsanlagen erzeugt werden, wie weiter unten näher beschrieben wird.

In einer weiteren bevorzugten Ausführungsform der Erfindung stellen auch die Eingabevektoren der Eingabeschicht des neuronalen Netzes prognostizierte Größen dar. Dabei umfasst der jeweilige Eingabevektor eine oder mehrere prognostizierte Eingangsgrößen für einen zukünftigen Zeitpunkt von aufeinander folgenden zukünftigen Zeitpunkten innerhalb eines zukünftigen Zeitraums, wobei der zukünftige Zeitraum analog zu den Ausgabevektoren vorzugsweise einen oder mehrere Tage umfasst und die Zeitpunkte vorzugsweise einen Abstand von einer Stunde haben. Die entsprechenden Prognosezeitpunkte für die Eingabevektoren können ggf. mit den Prognosezeitpunkten für die Ausgabevektoren übereinstimmen.

Wie bereits oben erwähnt, wird mit dem erfindungsgemäßen Verfahren in einer bevorzugten Variante ein technisches System in der Form einer elektrischen Energieerzeugungsanlage und insbesondere in der Form einer regenerativen elektrischen Energieerzeugungsanlage modelliert. Insbesondere ist die Energieerzeugungsanlage dabei eine Windkraftanlage mit einer oder mehreren Windturbinen, z.B. in der Form eines Windparks. Die Energieerzeugungsanlage kann ferner eine Solarenergieanlage darstellen, insbesondere eine Solarthermieanlage und/oder eine Photovoltaikanlage.

Bei der Verwendung des erfindungsgemäßen Verfahrens für eine Energieerzeugungsanlage umfasst in einer bevorzugten Variante ein jeweiliger Ausgabevektor als Betriebsgrößen durch die Energieerzeugungsanlage generierte Energiemengen für eine Mehrzahl von aufeinander folgenden zukünftigen Zeitpunkten. Der Begriff der Energiemenge ist dabei weit zu verstehen und kann sich auf die in einem bestimmten Zeitraum erzeugte Energiemenge bzw. auf eine Energiemenge pro Zeiteinheit und damit eine elektrische Leistung beziehen. Vorzugsweise stellt eine Energiemenge die zwischen zwei aufeinander folgenden zukünftigen Zeitpunkten generierte Energiemenge dar. Diese Energiemenge ist für den jeweiligen betrachteten Zeitpunkt die zwischen dem vorherigen und dem betrachteten Zeitpunkt erzeugte Energiemenge, welche auch in der Form einer elektrischen Leistung angegeben werden kann (d.h. Energiemenge geteilt durch Zeitspanne zwischen den Zeitpunkten).

In einer weiteren bevorzugten Ausführungsform werden bei der Modellierung einer Energieerzeugungsanlage Eingabevektoren verwendet, welche jeweils als Eingangsgrößen eine oder mehrere prognostizierte Umgebungsbedingungen für einen zukünftigen Zeitpunkt aus einer Mehrzahl von zukünftigen Zeitpunkten umfassen, wobei die prognostizierten Umgebungsbedingungen insbesondere Wetterdaten bzw. Wettervorhersagen sind, welche z. B. von einem meteorologischen Dienst stammen. Die prognostizierten Wetterdaten beziehen sich dabei auf Daten, welche an einem Ort ermittelt wurden, die am oder möglichst nahe am geographischen Ort der entsprechenden Energieerzeugungsanlage liegt. Vorzugsweise umfassen die prognostizierten Umgebungsbedingungen dabei ein oder mehrere der folgenden Größen:
- eine oder mehrere Umgebungstemperaturen;
- einen oder mehrere Luftfeuchtigkeitswerte;
- eine oder mehrere Windgeschwindigkeiten und/oder Windrichtungen.

Diese Größen werden insbesondere im Zusammenhang mit einer Energieerzeugungsanlage in der Form einer Windkraftanlage verwendet. Dabei können z.B. Temperaturwerte für verschiedene Höhen, insbesondere für 25 m, 50 m oder 150 m, berücksichtigt werden, wodurch der Tatsache Rechnung getragen wird, dass die Windturbinen einer Windkraftanlage große Durchmesser aufweisen. Zusätzlich oder alternativ zu den genannten Größen können als weitere Umgebungsbedingungen eine oder mehrere Werte betreffend die Bedeckung des Himmels mit Wolken bzw. ein oder mehrere Sonneneinstrahlungswerte (z.B. angegeben in Lichtintensitäten) berücksichtigt werden. Die zuletzt genannten Umgebungsbedingungen fließen insbesondere bei der Verwendung des erfindungsgemäßen Verfahrens zur Modellierung von Solarenergieanlagen mit ein.

Die Modellierung des technischen Systems und eine darauf basierende Prädiktion kann in einer bevorzugten Variante der Erfindung dadurch verbessert werden, dass auch die Ausgaben eines analytischen Modells berücksichtigt werden. In diesem Fall umfasst die Eingabeschicht des neuronalen Netzes eine oder mehrere Eingangsneuronen zur Beschreibung von einem oder mehreren weiteren Eingabevektoren. Diese weiteren Eingabevektoren unterscheiden sich von den Eingabevektoren zur Beschreibung der Eingangsgrößen. Sie stellen stattdessen eine oder mehrere der Betriebsgrößen des technischen Systems dar, welche mit einem geeigneten analytischen Modell bestimmt sind. In Analogie zu dem neuronalen Netz liefert auch das analytische Modell basierend auf entsprechenden Eingangsgrößen Betriebsgrößen des technischen Systems.

Die Anzahl an versteckten Schichten und versteckten Neuronen kann in dem neuronalen Netz der Erfindung je nach Anwendungsfall unterschiedlich gewählt werden. In einer Variante der Erfindung können in dem neuronalen Netz zehn oder mehr versteckte Schichten und somit auch zehn oder mehr Ausgabecluster vorgesehen sein. Die Anzahl von versteckten Neuronen in der versteckten Schicht liegt beispielsweise zwischen 20 und 30 Neuronen.

Das neuronale Netz kann im Rahmen des erfindungsgemäßen Verfahrens mit an sich bekannten Lernverfahren gelernt werden. Insbesondere wird dabei im Rahmen des Lernens für jeden Ausgabecluster als Zielgröße der Unterschied zwischen dem durch den Ausgabecluster beschriebenen Ausgabevektor und dem Ausgabevektor gemäß den Trainingsdaten minimiert. Das Lernen wird in einer bevorzugten Variante mit dem hinlänglich aus dem Stand der Technik bekannten Fehler-Rückpropagations-Verfahren (engl. Error Backpropagation) realisiert.

Neben dem oben beschriebenen Verfahren zur Modellierung eines technischen Systems betrifft die Erfindung ferner ein Verfahren zur Prädiktion von einem oder mehreren Betriebsparametern eines technischen Systems, wobei einem neuronalen Netz, das mit dem erfindungsgemäßen Verfahren gelernt ist, eine oder mehrere Eingangsgrößen über die Eingabeschicht zugeführt werden, woraufhin durch das neuronale Netz für zumindest einen Ausgabecluster der Ausgabeschicht des neuronalen Netzes ein entsprechender Ausgabevektor mit einem oder mehreren Betriebsparametern des technischen Systems bestimmt wird. Das Prädiktionsverfahren hat den Vorteil, dass ggf. nur ein bestimmter Teil des neuronalen Netzes im Rahmen der Prädiktion verwendet werden kann und höhere versteckte Schichten mit den damit gekoppelten Ausgabevektoren bei der Prädiktion weggelassen werden. Insbesondere kann dabei der zur Prädiktion verwendete Ausschnitt des neuronalen Netzes in Abhängigkeit von der Prognosegüte geeignet festgelegt werden.

In einer Variante des erfindungsgemäßen Prädiktionsverfahrens werden für mehrere und insbesondere für alle Ausgabecluster entsprechende Ausgabevektoren bestimmt. Dabei können deren Betriebsgrößen anschließend gemittelt werden, wobei der Mittelwert dann die prädizierte Betriebsgröße darstellt.

Neben den oben beschriebenen Verfahren betrifft die Erfindung ferner ein Computerprogrammprodukt mit einem auf einem maschinenlesbaren Datenträger gespeicherten Programmcode zur Durchführung der entsprechenden Verfahren bzw. von bevorzugten Varianten der Verfahren, wenn der Programmcode auf einem Rechner ausgeführt wird.

Ausführungsbeispiele der Erfindung werden nachfolgend anhand der beigefügten Figuren detailliert beschrieben.

Es zeigen:
- Fig. 1: eine schematische Darstellung einer Ausführungsform einer im erfindungsgemäßen Verfahren verwendeten neuronalen Netzstruktur; und
- Fig. 2: ein Diagramm, welches mit dem erfindungsgemäßen Verfahren prognostizierte Energiemengen einer Windkraftanlage mit den tatsächlich erzeugten Energiemengen vergleicht.

Nachfolgend wird eine Ausführungsform des erfindungsgemäßen Verfahrens anhand eines technischen Systems in der Form einer Windkraftanlage erläutert, wobei mit dem Verfahren die von der Windkraftanlage generierten Energiemengen, die in ein Stromnetz eingespeist werden, über ein neuronales Netz prognostiziert werden. Diese Prognose verwendet Umgebungsbedingungen, denen die Windkraftanlage ausgesetzt ist. Die Umgebungsbedingungen sind dabei Wetterdaten, welche ebenfalls Prognosen sind, die z.B. von einem meteorologischen Dienst stammen. In der hier beschriebenen Ausführungsform wurden dabei für den Ort, an dem die Windturbinen der Windkraftanlage aufgestellt sind, die Temperatur, die Luftfeuchtigkeit sowie die Windrichtung und die Windstärke als Umgebungsbedingungen berücksichtigt. Es können dabei Temperaturen für verschiedene Höhen einfließen, denn der Mast der einzelnen Windturbinen erstreckt sich in vertikaler Richtung über eine größere Länge. Insbesondere können z.B. Temperaturwerte in der Höhe von 25 m, 50 m und 150 m berücksichtigt werden.

Das erfindungsgemäße Verfahren kann ggf. auch für andere Energieerzeugungsanlagen als Windkraftanlagen eingesetzt werden. Zum Beispiel kann das Verfahren zur Prognose der von einer Photovoltaikanlage erzeugten Energiemengen verwendet werden. In diesem Fall fließen als Eingangsgrößen vorzugsweise ebenfalls Temperatur, Luftfeuchtigkeit, Windrichtung und Windstärke ein. Zusätzlich werden dabei auch der Bedeckungsgrad des Himmels mit Wolken bzw. die Sonneneinstrahlung berücksichtigt. Es ist jedoch nicht mehr erforderlich, Temperaturwerte für unterschiedliche Höhen zu ermitteln, da sich die Paneele einer Photovoltaikanlage in der Regel auf einem einheitlichen Höhenniveau befinden.

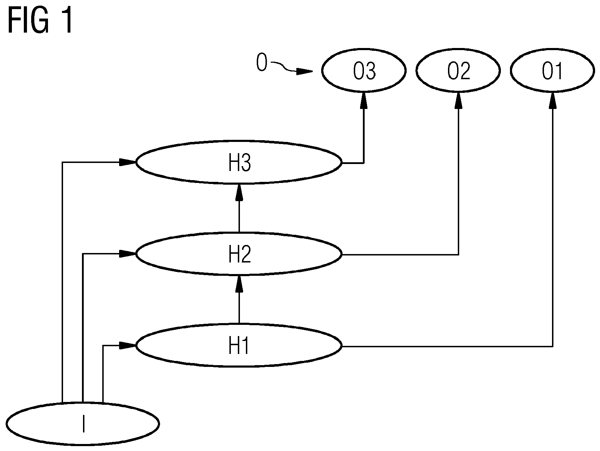

Die mit dem erfindungsgemäßen Verfahren durchgeführte Prognose wird über ein neuronales Netz realisiert, welches mit geeigneten Trainingsdaten aus bekannten erzeugten Energiemengen und bekannten Umgebungsbedingungen gelernt wird. Das neuronale Netz weist dabei eine spezielle Netzstruktur auf, welche in Fig. 1 gezeigt ist.

Das neuronale Netz der Fig. 1 ist ein Feed-Forward-Netz mit einer Mehrzahl von übereinander liegenden Schichten, wobei eine Kopplung der unterschiedlichen Schichten nur in Verarbeitungsrichtung von tieferen zu höheren Schichten erfolgt und innerhalb einer Schicht die darin enthaltenen Neuronen nicht miteinander gekoppelt sind. Das Netz der Fig. 1 umfasst eine Eingabeschicht I mit Eingangsneuronen, drei versteckte Schichten H1, H2 und H3 mit versteckten Neuronen sowie eine Ausgabeschicht O, welche in drei separate Ausgabecluster O1, O2 und O3 aus Ausgabeneuronen unterteilt ist. Die an sich bekannten Kopplungen zwischen den Schichten, über welche die Neuronen der einen Schicht mittels entsprechender Gewichtsmatrizen mit den Neuronen der anderen Schicht verbunden sind, sind durch Pfeile angedeutet. Die Aktivierungsfunktionen der einzelnen Neuronen sind in dem Netz der Fig. 1 nicht-linear und werden bspw. durch einen tanh repräsentiert.

Im Unterschied zu einem herkömmlichen Feed-Forward-Netz zeichnet sich das neuronale Netz der Fig. 1 dadurch aus, dass für jede der versteckten Schichten H1, H2 bzw. H3 ein separater Ausgabecluster O1, O2 bzw. O3 existiert. D.h., jede versteckte Schicht ist genau einem Ausgabecluster zugeordnet und jeder Ausgabecluster ist nur mit einer versteckten Schicht über Gewichtsmatrizen gekoppelt. Herkömmlicherweise enthält ein Feed-Forward-Netz nur eine Verbindung zwischen der obersten versteckten Schicht und der Ausgabeschicht. Durch die erfindungsgemäße Verwendung von zusätzlichen Ausgabeclustern, welche mit tieferen versteckten Schichten verbunden sind, wird der Ausgabeschicht zusätzliche Fehlerinformation zugeführt, wodurch ein Verschwinden der Fehlerinformation für kleine Gewichte vermieden wird.

Jeder der Ausgabecluster O1 bis O3 prädiziert die gleichen Energiemengen der Windkraftanlage für eine Vielzahl von zukünftigen Zeitpunkten. D.h., durch jeden Ausgabecluster werden die gleichen Betriebsgrößen der Windkraftanlage vorhergesagt. Somit stellt jeder Ausgabecluster unabhängig von den anderen Clustern Vorhersagewerte für die Energiemengen bereit. Als endgültiger Prognosewert für einen jeweiligen zukünftigen Zeitpunkt kann dabei z.B. der gemittelte Wert aus den Energiemengen der einzelnen Ausgabecluster bestimmt werden. In der hier beschriebenen Ausführungsform beschreibt ein Ausgabecluster stündliche Vorhersagen für die mit der Windkraftanlage erzeugten Energiemengen innerhalb eines Vorhersagezeitraums von einem oder auch mehreren Tagen. Ein einzelnes Ausgabeneuron repräsentiert dabei eine vorhergesagte Energiemenge für einen bestimmten Zeitpunkt. Wird als Prognosezeitraum ein Intervall von einem Tag betrachtet, enthält ein Ausgabecluster somit 24 Neuronen für jede Stunde innerhalb eines Tages.

Ein weiterer Unterschied des Netzes der Fig. 1 gegenüber herkömmlichen Feed-Forward-Netzen besteht darin, dass die Eingabeschicht I nicht nur mit der untersten versteckten Schicht H1, sondern auch mit den anderen, darüber liegenden versteckten Schichten H2 und H3 direkt verbunden ist. Durch diese Zuführung der Eingabeschicht zu allen versteckten Schichten wird vermieden, dass die Information der Eingabeschicht im Rahmen der Verarbeitung im neuronalen Netz verloren geht.

Im Rahmen der Verwendung des neuronalen Netzes für Windkraftanlagen enthält die Eingabeschicht I eine Vielzahl von Eingangsneuronen, welche entsprechende Eingabevektoren bilden, wobei jeder Eingabevektor prognostizierte Wetterdaten zu einem bestimmten Vorhersagezeitpunkt darstellt. In Analogie zur Ausgabeschicht können prognostizierte Wetterdaten in stündlichen Intervallen für die nächsten 24 Stunden berücksichtigt werden. D.h., die Eingabeschicht enthält für jede Stunde einen entsprechenden Eingabevektor, der ein Eingangsneuron für jeden prognostizierten Wert umfasst. Je nach Anwendungsfall kann die Anzahl der im neuronalen Netz verwendeten versteckten Schichten variieren. Beispielsweise können zehn versteckte Schichten verwendet werden, welche dann wiederum zu zehn Ausgabeclustern führen. Die Anzahl der Neuronen in den einzelnen versteckten Schichten kann ebenfalls variieren. Insbesondere kann eine versteckte Schicht 20 bis 30 Neuronen umfassen.

In einer Abwandlung des neuronalen Netzes der Fig. 1 werden neben den Eingangsvektoren, welche Umgebungsbedingungen beschreiben, weitere Eingabevektoren berücksichtigt, welche Vorhersagen der Energiemengen darstellen, die über ein analytisches Modell bestimmt wurden. In einer von den Erfindern umgesetzten Variante wurde dabei das an sich aus dem Stand der Technik bekannte Jensen-Modell als analytisches Modell verwendet. Dieses Modell beschreibt die von Windkraftanlagen generierten Energiemengen in Abhängigkeit von Wetterdaten und ist beispielsweise in den Druckschriften [1] und [2] beschrieben. Durch die Verwendung von über ein analytisches Modell prognostizierten Betriebsparametern als weitere Eingabevektoren kann die Prognosegüte des neuronalen Netzes weiter verbessert werden.

Im Rahmen des Lernens des neuronalen Netzes der Fig. 1 wird jeder der Ausgabecluster O1 bis O3 mit Trainingsdaten aus bekannten vorhergesagten Wetterdaten und darauf basierenden Energiemengen gelernt, wobei der Zielwert des Lernens die Minimierung der Abweichung zwischen den über die jeweiligen Ausgabecluster ausgegebenen Energiemengen und den Energiemengen gemäß den Trainingsdaten ist. Das neuronale Netz kann dabei in an sich bekannter Weise mit herkömmlichen Lernverfahren gelernt werden. In einer besonders bevorzugten Variante wird das aus dem Stand der Technik bekannte Fehler-Rückpropagations-Verfahren (engl. Error Backpropagation) eingesetzt.

Nach dem Lernen des neuronalen Netzes mit geeigneten Trainingsdaten können dann im Realbetrieb der Windkraftanlage zukünftig erzeugte Einspeiseleistungen vorhergesagt werden. Dem Betreiber der Windkraftanlage wird somit eine bessere Planung bei der Bereitstellung der erzeugten Energiemenge ermöglicht. Insbesondere kann der Betreiber sein Angebot an Energiemenge auf dem Energiemarkt an die Prognosewerte anpassen. Aufgrund einer geeigneten Prognose der künftigen Energieerzeugung können die erzeugten Energiemengen auch besser als Regelenergie im Energienetz verwendet werden. Bei der Verwendung des neuronalen Netzes im Realbetrieb eines technischen Systems besteht ggf. auch die Möglichkeit, dieses Netz online im Betrieb in regelmäßigen Abständen basierend auf neu hinzukommenden tatsächlich erzeugten Energiemengen weiter zu lernen.

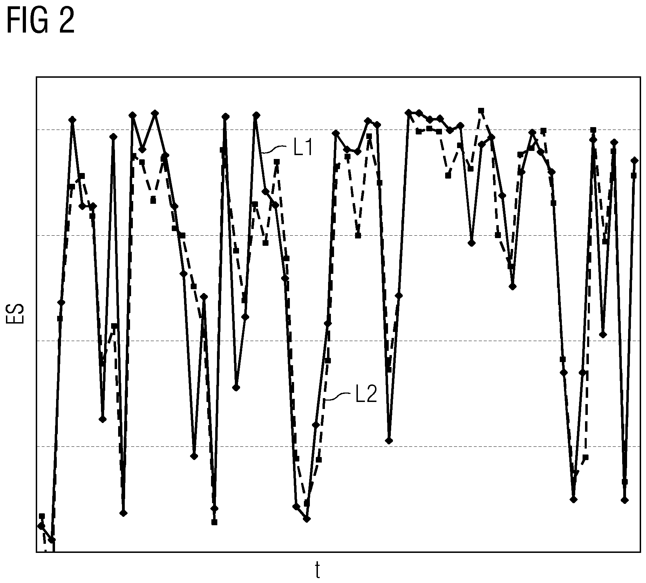

Fig. 2 zeigt ein Diagramm, welches die mit einem erfindungsgemäßen neuronalen Netz prognostizierten Energiemengen einer Windkraftanlage mit den tatsächlich erzeugten Energiemengen vergleicht. Entlang der Abszisse des Diagramms ist dabei die Zeit t in Einheiten von Tagen aufgetragen und entlang der Ordinate die erzeugte Energiemenge ES (ES = Energy Supply) für einen entsprechenden Tag. Die gestrichelte Linie L2 repräsentiert dabei mit dem erfindungsgemäßen neuronalen Netz vorhergesagte Energiemengen für einen Prognosezeitpunkt von 12 Stunden in der Zukunft. Demgegenüber stellt die durchgezogene Linie L1 die tatsächlich erzeugten Energiemengen der Windkraftanlage dar. Man erkennt, dass mit dem erfindungsgemäßen neuronalen Netz in der Tat eine sehr gute Prognose von Energiemengen und damit von Einspeiseleistungen einer Windkraftanlage erreicht werden kann.

Die im Vorangegangenen beschriebenen Ausführungsformen des erfindungsgemäßen Verfahrens weisen eine Reihe von Vorteilen auf. Insbesondere können mit der erfindungsgemäßen neuronalen Netzstruktur, bei der Ausgabecluster für jede versteckte Schicht vorgesehen sind, sehr gut Betriebsparameter eines technischen Systems mit einem hohen Grad an Nichtlinearität vorhergesagt werden. Das Verfahren eignet sich besonders gut zur Vorhersage der von einer regenerativen Energieerzeugungsanlage erzeugten Energiemengen basierend auf vorhergesagten Wetterdaten, wobei ggf. zusätzlich über ein analytisches bzw. physikalisches Modell ermittelte Energiemengen der Eingabeschicht des neuronalen Netzes zugeführt werden können.

### Literaturverzeichnis:

[1] N.O. Jensen. A Note on Wind Generator Interaction. Technical Report m-2411, Risø, Roskilde, 1983.
[2] I. Katic, J. Højstrup, and N.O. Jensen. A Simple Model for Cluster Efficiency. In EWEC 1986, Vol. 1, Seiten 407-410, Rode, 1986.

## Patentansprüche

1. Verfahren zur rechnergestützten Modellierung eines technischen Systems, bei dem:
- ein oder mehrere Ausgabevektoren in Abhängigkeit von einem oder mehreren Eingabevektoren durch das Lernen eines neuronalen Netzes (NN) basierend auf Trainingsdaten aus bekannten Eingabevektoren und Ausgabevektoren modelliert werden, wobei ein jeweiliger Ausgabevektor eine oder mehrere Betriebsgrößen des technischen Systems und ein jeweiliger Eingabevektor eine oder mehrere, die Betriebsgröße oder Betriebsgrößen beeinflussende Eingangsgrößen umfasst;
- das neuronale Netz (NN) ein Feed-Forward-Netz mit mehreren miteinander verbundenen Schichten (I, H1, H2, H3, O) ist, welche eine Eingabeschicht (I), eine Mehrzahl von versteckten Schichten (H1, H2, H3) und eine Ausgabeschicht (O) umfassen, wobei die Eingabeschicht (I) eine Anzahl von Eingangsneuronen zur Beschreibung des oder der Eingabevektoren enthält und wobei eine jeweilige versteckte Schicht (H1, H2, H3) eine Anzahl von versteckten Neuronen enthält und wobei die Ausgabeschicht (O) eine Anzahl von Ausgabeneuronen zur Beschreibung des oder der Ausgabevektoren enthält;
**dadurch gekennzeichnet,**
**dass** die Ausgabeschicht (O) eine der Mehrzahl von versteckten Schichten (H1, H2, H3) entsprechende Mehrzahl von Ausgabeclustern (O1, O2, 03) aus jeweils einem oder mehreren Ausgabeneuronen umfasst, wobei jeder Ausgabecluster (O1, O2, 03) den gleichen Ausgabevektor beschreibt und mit einer anderen versteckten Schicht (H1, H2, H3) verbunden ist,
**dass** die Eingabeschicht (I) des neuronalen Netzes (NN) mit jeder der versteckten. Schichten (H1, H2, H3) verbunden ist und
**dass** zur Prädiktion von einem oder mehreren Betriebsparametern des technischen Systems dem gelernten neuronalen Netz (NN) eine oder mehrere Eingangsgrößen über die Eingabeschicht (I) zugeführt werden, woraufhin durch das neuronale Netz (NN) für zumindest einen Ausgabecluster (O1, 02, 03) der Ausgabeschicht (O) ein entsprechender Ausgabevektor mit einem oder mehreren Betriebsparametern des technischen Systems bestimmt wird.

2. Verfahren nach Anspruch 1, bei dem ein jeweiliger Ausgabevektor eine oder mehrere Betriebsgrößen für mehrere aufeinander folgende zukünftige Zeitpunkte innerhalb eines zukünftigen Zeitraums umfasst, wobei der zukünftige Zeitraum vorzugsweise einen oder mehrere Tage umfasst und die Zeitpunkte vorzugsweise einen Abstand von einer Stunde haben.

3. Verfahren nach eine der vorhergehenden Ansprüche, bei dem ein jeweiliger Eingabevektor eine oder mehrere prognostizierte Eingangsgrößen für einen zukünftigen Zeitpunkt von aufeinander folgenden zukünftigen Zeitpunkten innerhalb eines zukünftigen Zeitraums umfasst, wobei der zukünftige Zeitraum vorzugsweise einen oder mehrere Tage umfasst und die Zeitpunkte vorzugsweise einen Abstand von einer Stunde haben.

4. Verfahren nach einem der vorhergehenden Ansprüche, bei dem mit dem Verfahren ein technisches System in der Form einer elektrischen Energieerzeugungsanlage und insbesondere einer regenerativen elektrischen Energieerzeugungsanlage modelliert wird.

5. Verfahren nach Anspruch 4, bei dem die Energieerzeugungsanlage eine Windkraftanlage und/oder eine Solarenergieanlage umfasst, insbesondere eine Solarthermieanlage und/oder eine Photovoltaikanlage,

6. Verfahren nach Anspruch 4 oder 5, bei dem ein jeweiliger Ausgabevektor als Betriebsgrößen durch die Energieerzeugungsanlage generierte Energiemengen (ES) für eine Mehrzahl von aufeinander folgenden zukünftigen Zeitpunkten umfasst, wobei eine Energiemenge (ES) vorzugweise die zwischen zwei aufeinander folgenden zukünftigen Zeitpunkten generierte Energiemenge ist.

7. Verfahren nach einem der Ansprüche 4 bis 6, bei dem ein jeweiliger Eingabevektor als Eingangsgrößen eine oder mehrere prognostizierte Umgebungsbedingungen für einen zukünftigen Zeitpunkt aus einer Mehrzahl von zukünftigen Zeitpunkten umfasst, wobei die prognostizierten Umgebungsbedingungen insbesondere Wetterdaten sind.

8. Verfahren nach Anspruch 7, bei dem die prognostizierte Umgebungsbedingung oder prognostizierten Umgebungsbedingungen eine oder mehrere der folgenden Größen umfassen:
- eine oder mehrere Umgebungstemperaturen;
- einen oder mehrere Luftfeuchtigkeitswerte;
- eine oder mehrere Windgeschwindigkeiten und/oder Windrichtungen;
- eine oder mehrere Werte betreffend die Bedeckung des Himmels mit Wolken;
- einen oder mehrere Sonneneinstrahlungswerte.

9. Verfahren nach einem der vorhergehende Ansprüche, bei dem die Eingabeschicht (I) ferner eine oder mehrere Eingangsneuronen zur Beschreibung von einem oder mehreren weiteren Eingabevektoren umfasst, wobei der oder die weiteren Eingabevektoren eine oder mehrere der Betriebsgrößen des technischen Systems umfassen, welche mit einem analytischen Modell bestimmt sind.

10. Verfahren nach einem der vorhergehenden Ansprüche, bei dem 10 oder mehr versteckte Schichten vorgesehen sind und/oder jede versteckte Schicht zwischen 20 und 30 versteckte Neuronen umfasst.

11. Verfahren nach einem der vorhergehende Ansprüche, bei dem im Rahmen des Lernens des neuronalen Netzes für jeden Ausgabecluster (O1, O2, 03) als Zielgröße der Unterschied zwischen dem durch den Ausgangscluster (O1, O2, 03) beschriebenen Ausgabevektor und dem Ausgabevektor gemäß den Trainingsdaten minimiert wird.

12. Verfahren nach einem der vorhergehenden Ansprüche, bei dem das Lernen des neuronalen Netzes basierend auf Fehler-Rückpropagation erfolgt.

13. Verfahren nach Anspruch 1, bei dem für mehrere und insbesondere für alle Ausgabecluster (O1, O2, O3) die entsprechenden Ausgabevektoren bestimmt werden, deren Betriebsgrößen anschließend gemittelt werden.

14. Computerprogrammprodukt mit einem auf einem maschinenlesbaren Datenträger gespeicherten Programmcode zur Durchführung eines Verfahrens nach einem der vorhergehenden Ansprüche, wenn der Programmcode auf einem Rechner ausgeführt wird.

## Claims

1. Method for the computer-assisted modeling of a technical system, in which:
- one or more output vectors are modeled on the basis of one or more input vectors by means of the learning process of a neural network (NN) based on training data comprising known input vectors and output vectors, a respective output vector comprising one or more operating variables of the technical system and a respective input vector comprising one or more input variables which influence the operating variable(s);
- the neural network (NN) is a feed-forward network having a plurality of layers (I, H1, H2, H3, O) which are connected to one another and comprise an input layer (I), a plurality of hidden layers (H1, H2, H3) and an output layer (O), the input layer (I) containing a number of input neurons for describing the input vector(s), and a respective hidden layer (H1, H2, H3) containing a number of hidden neurons, and the output layer (O) containing a number of output neurons for describing the output vector(s);
**characterized**
**in that** the output layer (O) comprises a plurality of output clusters (O1, O2, O3) each comprising one or more output neurons, said plurality of output clusters corresponding to the plurality of hidden layers (H1, H2, H3), and each output cluster (O1, O2, O3) describing the same output vector and being connected to another hidden layer (H1, H2, H3), in that the input layer (I) of the neural network (NN) is connected to each of the hidden layers (H1, H2, H3) and
**in that**, for predicting one or more operating parameters of the technical system, one or more input variables are supplied to the neural network (NN) which has learnt, via the input layer (I), whereupon the neural network (NN) determines a corresponding output vector having one or more operating parameters of the technical system for at least one output cluster (O1, O2, O3) of the output layer (O).

2. Method according to Claim 1, in which a respective output vector comprises one or more operating variables for a plurality of successive future times within a future period, the future period preferably comprising one or more days and the times preferably having an interval of one hour.

3. Method according to either of the preceding claims, in which a respective input vector comprises one or more predicted input variables for a future time of successive future times within a future period, the future period preferably comprising one or more days and the times preferably having an interval of one hour.

4. Method according to one of the preceding claims, in which the method is used to model a technical system in the form of an electrical energy generation installation and, in particular, a regenerative electrical energy generation installation.

5. Method according to Claim 4, in which the energy generation installation comprises a wind power installation and/or a solar energy installation, in particular a solar thermal installation and/or a photovoltaic installation.

6. Method according to Claim 4 or 5, in which a respective output vector comprises, as operating variables, amounts of energy (ES) generated by the energy generation installation for a plurality of successive future times, an amount of energy (ES) preferably being the amount of energy generated between two successive future times.

7. Method according to one of Claims 4 to 6, in which a respective input vector comprises, as input variables, one or more predicted environmental conditions for a future time from a plurality of future times, the predicted environmental conditions being weather data, in particular.

8. Method according to Claim 7, in which the predicted environmental condition(s) comprise(s) one or more of the following variables:
- one or more ambient temperatures;
- one or more humidity values;
- one or more wind speeds and/or wind directions;
- one or more values relating to the cloud cover of the sky;
- one or more solar radiation values.

9. Method according to one of the preceding claims, in which the input layer (I) also comprises one or more input neurons for describing one or more further input vectors, the further input vector(s) comprising one or more of the operating variables of the technical system which are determined using an analytical model.

10. Method according to one of the preceding claims, in which 10 or more hidden layers are provided and/or each hidden layer comprises between 20 and 30 hidden neurons.

11. Method according to one of the preceding claims, in which, during the learning process of the neural network, the difference between the output vector described by the output cluster (O1, O2, O3) and the output vector according to the training data is minimized, as the target variable, for each output cluster (O1, O2, O3).

12. Method according to one of the preceding claims, in which the learning process of the neural network takes place on the basis of error back-propagation.

13. Method according to Claim 1, in which the corresponding output vectors are determined for a plurality of output clusters and, in particular, for all output clusters (O1, O2, O3), the operating variables of which output vectors are then averaged.

14. Computer program product having a program code which is stored on a machine-readable data storage medium and is intended to carry out a method according to one of the preceding claims when the program code is executed on a computer.

## Revendications

1. Procédé de modélisation d'un système technique assistée par ordinateur, dans lequel :
- un ou plusieurs vecteurs de sortie sont modélisés en fonction d'un ou de plusieurs vecteurs d'entrée par l'apprentissage d'un réseau neuronal (NN) sur la base de données d'apprentissage issues de vecteurs d'entrée et de vecteurs de sortie connus, un vecteur de sortie respectif comprenant une ou plusieurs grandeurs de fonctionnement du système technique et un vecteur d'entrée respectif comprenant une ou plusieurs grandeurs d'entrée qui influencent la ou les grandeurs de fonctionnement ;
- le réseau neuronal (NN) est un réseau feed forward avec plusieurs couches reliées entre elles (I, H1, H2, H3, O) et qui comprennent une couche d'entrée (I), une pluralité de couches cachées (H1, H2, H3) et une couche de sortie (O), la couche d'entrée (I) contenant un nombre de neurones d'entrée pour décrire le ou les vecteurs d'entrée et une couche cachée respective (H1, H2, H3) contenant un nombre de neurones cachés et la couche de sortie (O) contenant un nombre de neurones de sortie pour décrire le ou les vecteurs de sortie, **caractérisé en ce que** :
la couche de sortie (O) comprend une pluralité de clusters de sortie (O1, O2, O3) correspondant à la pluralité de couches cachées (H1, H2, H3) et constitués respectivement d'un ou de plusieurs neurones de sortie, chaque cluster de sortie (O1, O2, O3) décrivant le même vecteur de sortie et étant relié à une autre couche cachée (H1, H2, H3) ;
la couche d'entrée (I) du réseau neuronal (NN) est reliée à chacune des couches cachées (H1, H2, H3) et pour prédire un ou plusieurs paramètres de fonctionnement du système technique, une ou plusieurs grandeurs d'entrée sont amenées au réseau neuronal (NN) appris via la couche d'entrée (I), suite à quoi le réseau neuronal (NN) détermine, pour au moins un cluster de sortie (O1, O2, O3) de la couche de sortie (O), un vecteur de sortie correspondant avec un ou plusieurs paramètres de fonctionnement du système technique.

2. Procédé selon la revendication 1, dans lequel un vecteur de sortie respectif comprend une ou plusieurs grandeurs de fonctionnement pour plusieurs instants futurs successifs dans un espace de temps futur, l'espace de temps futur comprenant préférentiellement un ou plusieurs jours et les instants étant préférentiellement distants d'une heure.

3. Procédé selon l'une des revendications précédentes, dans lequel un vecteur d'entrée respectif comprend une ou plusieurs grandeurs d'entrée prévisionnelles pour un instant futur d'instants futurs successifs dans un espace de temps futur, l'espace de temps futur comprenant préférentiellement un ou plusieurs jours et les instants étant préférentiellement distants d'une heure.

4. Procédé selon l'une des revendications précédentes, dans lequel est modélisé, avec le procédé, un système technique sous la forme d'une installation électrique de production d'énergie, et plus particulièrement d'une installation électrique de production d'énergie régénérative.

5. Procédé selon la revendication 4, dans lequel l'installation de production d'énergie inclut une installation d'énergie éolienne et/ou une installation d'énergie solaire, et plus particulièrement une installation thermique solaire et/ou une installation photovoltaïque.

6. Procédé selon la revendication 4 ou 5, dans lequel un vecteur de sortie respectif comprend, en tant que grandeurs de fonctionnement, des quantités d'énergie (ES) générées par l'installation de production d'énergie pour une pluralité d'instants futurs successifs, une quantité d'énergie (ES) étant préférentiellement la quantité d'énergie générée entre deux instants futurs successifs.

7. Procédé selon l'une des revendications 4 à 6, dans lequel un vecteur d'entrée respectif comprend, en tant que grandeurs d'entrée, une ou plusieurs conditions environnementales prévisionnelles pour un instant futur d'une pluralité d'instants futurs, les conditions environnementales prévisionnelles étant plus particulièrement des données météorologiques.

8. Procédé selon la revendication 7, dans lequel la condition environnementale prévisionnelle ou les conditions environnementales prévisionnelles comprennent une ou plusieurs des grandeurs suivantes :
- une ou plusieurs températures ambiantes ;
- une ou plusieurs valeurs d'humidité de l'air ;
- une ou plusieurs vitesses du vent et/ou directions du vent ;
- une ou plusieurs valeurs concernant la nébulosité du ciel ;
- une ou plusieurs valeurs de rayonnement solaire.

9. Procédé selon l'une des revendications précédentes, dans lequel la couche d'entrée (I) comprend en outre un ou plusieurs neurones d'entrée pour décrire un ou plusieurs autres vecteurs d'entrée, le ou les autres vecteurs d'entrée comprenant une ou plusieurs des grandeurs de fonctionnement du système technique qui sont déterminées par un modèle analytique.

10. Procédé selon l'une des revendications précédentes, dans lequel sont prévues 10 couches cachées ou plus et/ou chaque couche cachée comprend entre 20 et 30 neurones cachés.

11. Procédé selon l'une des revendications précédentes, dans lequel est minimisée, dans le cadre de l'apprentissage du réseau neuronal, pour chaque cluster de sortie (O1, O2, O3), en tant que grandeur cible, la différence entre le vecteur de sortie décrit par le cluster de sortie (O1, O2, O3) et le vecteur de sortie selon les données d'apprentissage.

12. Procédé selon l'une des revendications précédentes, dans lequel l'apprentissage du réseau neuronal a lieu sur la base d'une rétropropagation d'erreur.

13. Procédé selon la revendication 1, dans lequel sont déterminés, pour plusieurs, et plus particulièrement pour tous les clusters de sortie (O1, O2, O3), les vecteurs de sortie correspondants dont les grandeurs de fonctionnement font ensuite l'objet d'un calcul de la moyenne.

14. Produit de programme informatique avec un code de programme stocké sur un support de données lisible par machine pour exécuter un procédé selon l'une des revendications précédentes lorsque le code de programme est exécuté sur un ordinateur.
